# EUROPEAN PATENT APPLICATION

(11) **EP 1 216 971 A1**
(43) Date of publication of application: **26.06.2002**
(21) Application number: 99939904.1
(22) Date of filing: 27.08.1999
(51) Int. Cl.: C03C 27/06, E06B 3/66

(54) **THE METHOD FOR MANUFACTURING VACUUM GLAZING AND ITS APPLICATION MECHANICAL SYSTEM**

(71) Applicant: Qingdao Synergy Technology Appliance Co., Ltd., Qingdao City 266001 (CN)
(72) Inventor: ZHAO, Xinjian, Qingdao City 266000 (CN); ZHAO, Taizhou, Qingdao City 266000 (CN)
(74) Representative: Fleuchaus, Leo, Dipl.-Ing.
(86) International application number: CN9900129
(87) International publication number: WO0116045

(57) **Abstract**

The invention discloses a method for manufacturing vacuum glazing and its application mechanical system. The method comprises the procedures of laying glass sheets, sealing glass edges, pumping vacuum and sealing pumpout tubes. The procedure of pumping vacuum is to convey the glass sheets into a vacuum chamber and then pump vacuum on both glass sheets and the vacuum chamber. The advantages of the method according to the invention over the traditional methods of manufacturing vacuum glazing are as follows: 1) it eliminates the pumping pipes connected to each vacuum glazing, including thin glass tubes and metal bellows, and makes the vacuum pumping system match directly with the vacuum chamber. Thus, not only is the vacuum-pumping speed and efficiency increased, but also the operation procedures are simplified, which benefits the mass production greatly. 2) It eliminates the sealing rings which are absolutely necessary in vacuum cupping method. Thus, the heating temperature is not restricted and the roasting temperature can reach over 300 ° C so that the vacuity is higher and more stable. 3) As it is not necessary to leave absorption space for scaling rings, the pumping holes can be made on the edges or corners of the glass sheets with the result that the vacuum glazing formed are more artistic. 4) Instead of taking out the vacuum glazing after the temperature in the vacuum chamber drops down and then sealing the pumpout tubes on it, as is operated in the traditional methods, the optimum method according to the invention, after sealing the edges of the glass sheets, pumps vacuum and seals the pumpout tubes by making use of, and in the period of, the afterheat of the vacuum glazing, so as to save both energy and operation time.

## Description

### Technical Field

The present invention relates to a method for manufacturing vacuum glazing and its application mechanical system.

### Background of the art

Vacuum glazing is a kind of thermal insulator used in construction field such as for doors and windows, etc.

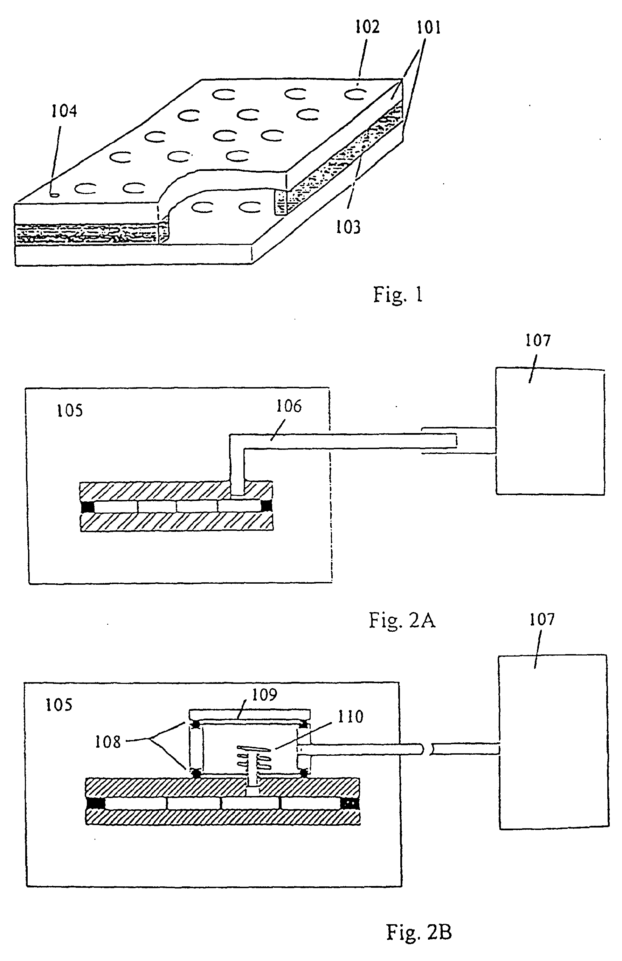

A typical structure of vacuum glazing is shown in Fig. 1, in which the numeral 101 designates two pieces of glass sheets, 102 the supports and 103 the sealing glass and 104 the evacuating hole, wherein the space between the two glass sheets is in a vacuum state.

The vacuity in the space between the two glass sheets has to be reached and maintained at 10⁻² Pa to make the gas heat transfer little enough to be neglected. Thus, an excellent and stable insulating property is obtained. Therefore, the eligible products can be obtained only by designing a requisite evacuating system according to the required vacuity target when the vacuum glazing is manufactured.

So far, the process for vacuum-pumping treatment of vacuum glazing is conducted by applying traditional procedure similar to the process for producing thermos, in which evacuating hole of each vacuum glazing is separately connected to a vacuum system by a evacuating pipeline. The method is shown in Fig. 2A, in which the long glass evacuating tube 106 of vacuum glazing is extended directly to the outside of the oven 105 and connected to the vacuum system107. The long glass tube is burned to be broken off and sealed after the vacuum glazing is baked and evacuated. Another method is shown in Fig. 2B, in which a cup-like component 109 with a gasket ring 108 is put over the evacuating hole on the vacuum glazing reversedly, and connected to the evacuating system 107 by a metal tube. The heating coil 110 previously installed in the vacuum cup is powered to make the glass evacuating tube to be melted and sealed after the vacuum glazing is baked and evacuated.

However, one difficulty of the method by means of glass tube connection shown in Fig. 2A is that the evacuating hole can not be prepared with a relatively thick glass tube, while the mechanical strength of thin glass tube is so low that the operation with it is not easy; the second difficulty is that a long residue evacuating tube is not permitted to be present for vacuum glazing so that the hole-sealing operation is relatively difficult. The method by means of cup-like device shown in Fig. 2B solved the difficulties described above, but the current gasket can only endure a temperature up to 200°C, it cannot be baked at a high temperature more than 300°C. Therefore, the quality and stability of products are degraded due to the insufficient air evacuation of the vacuum glazing.

Furthermore, it should be indicated that a relatively long evacuating tube has to be added to each vacuum glazing for all methods described above, and that the longer and thinner the evacuating tube is, the higher resistance to evacuating is, and the lower the evacuating rate is, the lower the efficiency of evacuation is. Moreover, the operation will become more difficult if the number of evacuating tubes increases.

### Objects of the present invention

Thus, it is an object of the present invention to provide a method for manufacturing vacuum glazing so as to manufacture products with high quality, high stability and high reliability with a simpler device, a higher evacuating efficiency and a simpler operation. The present invention also provides a device for manufacturing vacuum glazing to make the fabrication of vacuum glazing efficient and energy saving.

### Technical solution

According to one aspect of the present invention, there provides a method for manufacturing vacuum glazing, comprising the following steps:
(1) a step of placing starting starting sheets of vacuum glazing: placing two pieces of glass oppositely with a space between them, putting plurality of supports between them to keep the space, wherein at least one of the two pieces of glass has an evacuating hole which communicates with the inner space formed between the two pieces of glass;
(2) an edge-sealing step: sealing the edges of the starting sheets of vacuum glazing to make the edges of starting sheets of vacuum glazing to be completely sealed;
(3) an evacuating step: in a vacuum chamber, the edge-sealed starting sheets of vacuum glazing together with the vacuum chamber are evacuated to make the inner space between the starting sheets of vacuum glazing reach the required vacuity;
(4) a hole-sealing step: sealing the evacuating hole on the evacuated starting sheets of vacuum glazing, thereby obtaining the vacuum glazing with the required vacuity.

Another aspect of the present invention provides a method for manufacturing vacuum glazing, comprising the following steps:
(1) a step of placing the starting sheets of vacuum glazing: placing the two pieces of glass oppositely with a space between them, putting plurality of supports between the two pieces of glass to maintain the said space, setting glass powders for sealing at the edges of the space between the two pieces of glass, providing an evacuating hole on at least one of the starting glass sheets, and putting the glass tube and glass powders, used for sealing, on the evacuating hole;
(2) a heating and edge-sealing step: comprising that the placed starting glass sheets is heated to the melting temperature of the sealing glass powders to make the edges of the starting glass sheets form a completely sealed peripheral;
(3) an evacuating step: in a closed vacuum chamber, evacuating the edged-sealed starting sheets of vacuum glazing together with the said vacuum chamber to make the space between the two pieces of glass produce the required vacuity;
(4) a hole-sealing step: melting the glass tube to seal the evacuating hole of the evacuated starting sheets of vacuum glazing;
(5) a cooling step: cooling the hole-sealed starting sheets, thus obtaining the vacuum glazing with the required vacuity.

A further aspect of the present invention provides a device for manufacturing the vacuum glazing, comprising:
an airtight chamber, which is suitable to contain a plurality of starting sheets of vacuum glazing, wherein each starting sheet comprises two pieces of glass placed oppositely, there is a space between the two pieces of glass and a plurality of supports are put in the space to maintain it, wherein at least one piece of glass has a hole which communicates with the space formed between the two pieces of glass and is used for the evacuation;
a heating part, which can be controlled to make the temperature of the chamber rise or fall;
a vacuum system, which is used to evacuate the said chamber;
a hole-sealing mechanism, which is suitable to heat and seal the hole of each starting sheet of the vacuum glazing when the space between the glass sheets reached a predetermined vacuity;
a controlling device, which can be used to control the operation of the said heating part and the said vacuum system, and to make the said chamber to be at the following stages:
   a. the edge-sealing stage of the starting sheets of the vacuum glazing, at which the temperature of the chamber reaches the melting temperature of the sealing glass powders, and the pressure of the chamber is under the atmospheric pressure;
   b. evacuating stage, at which the chamber is at a temperature that can make the starting sheets of vacuum glazing to be sufficiently evacuated, and the vacuity of the chamber is the one that can make the space between the two starting sheets reaches the predetermined vacuity.

A still further aspect of the present invention provides a device for manufacturing vacuum glazing, which is used to fabricate vacuum glazing from a starting glass sheet, the said starting glass sheet includes two pieces of glass placed oppositely, there is a space between the two pieces of glass, and a plurality of supports are put in the space to maintain it, wherein at least one of the pieces of glass provides a hole which communicates with the space formed between the two pieces of glass and is used for evacuation.

The said device comprises:
a first chamber, the said first chamber can reach a first temperature, which is suitable for the edge-sealing operation of the starting sheets of vacuum glazing;
a second chamber, the said second chamber can reach a second temperature and a first vacuity, wherein the said second temperature is lower than the said first temperature, the said second temperature is suitable for the desorption of the components absorbed by glass, the said first vacuity is suitable to evacuate the starting sheets of vacuum glazing primarily;
a third chamber, the said third chamber can reach a third temperature and a a second vacuity, wherein the said second vacuity is higher than the said first vacuity; the said third temperature and the said second vacuity are suitable to desorb and evacuate the substances absorbed by the starting sheets of vacuum glazing, and to make the space between the two pieces of glass keep at a predetermined vacuity after the said hole is sealed;
the said third chamber further comprises a hole-sealing member which is suitable to heat and seal the hole on the starting sheets of vacuum glazing;
the said first, second and third chambers are connected to each other with vacuum valves, thereby making the second and the third chambers keep their vacuity.

The present invention also provides a device for manufacturing a vacuum glazing, which comprises:
(i) a starting sheets conveying part, which is used to convey the starting sheets of vacuum glazing;
(ii) an heating and edge-sealing part; which has a heater used to heat the starting sheets to the melting temperature of the sealing glass powder;
(iii) an evacuation part: which has an evacuation means and a closed vacuum chamber and is used to evacuate the edge-sealed glass sheets to the required vacuity together with the said vacuum chamber;
(iv) a hole-sealing part: which is used to seal the evacuating hole on the starting sheets of the vacuum glazing;
(v) a cooling part: which is used to cool the glass sheets, thereby obtaining the vacuum glazing with the required vacuity.

The present invention also provides a device for manufacturing vacuum glazing, which comprises:
an airtight chamber,
a heating part, which can be controlled to make the temperature of the chamber rise or fall;
a vacuum system, which is used to evacuate the said chamber;
a conveyor, which is suitable to contain a plurality of starting sheets of the vacuum glazing, each starting sheet including two pieces of glass placed oppositely with a space between them, a plurality of supports are put in the said space to maintain it, wherein at least one of the pieces of glass has a hole which communicates with the space formed between the two pieces of glass and is used for evacuation.
a hole-sealing mechanism, which is suitable to heat and seal the hole on each starting glass sheets when the space between the two pieces of glass reached to the predetermined vacuity;
a controlling device, which can control the operation of the said heating part and the said vacuum system;
wherein the said conveyor comprises a shield which encloses the contained starting sheets of the vacuum glazing, and the said conveyor can be put into and remove out of the said chamber, the said shield can be controllably in a first open state and in a second closed state, the said starting sheets of the vacuum glazing communicate with the said chamber so that they can be heated and evacuated when the shield is in the first open state, and they are shielded to maintain the temperature when the shield is in the second closed state.

A further aspect of the present invention provides a method for manufacturing vacuum glazing, which comprises the following steps:
placing at least one starting sheet of vacuum glazing on a conveyor, wherein each starting sheet of vacuum glazing includes two pieces of glass placed oppositely, and a space, in which a plurality of supports is arranged to keep the space, is present between the two pieces of glass, wherein at least one of the pieces of glass has a hole which communicates with the space formed between the two pieces of glass and is used for evacuation; the said conveyor device includes a shield which is used to enclose the said starting sheets of vacuum glazing; there has the sealing glass on the edges of each starting sheet of vacuum glazing;
putting the said conveyor device in a chamber and making the said shield in the first open state;
heating the said chamber to reach the melting temperature of the sealing glass, then decreasing the temperature step-by-step, thereby sealing the edges of the said starting sheet of vacuum glazing with the sealing glass;
evacuating the said chamber while keeping the chamber at the evacuating temperature of the glass;
sealing the said hole when the vacuity of the space between the two pieces of glass reached the predetermined value;
making the said shield in the second closed state and remove the said conveyor device as a whole from the said chamber.

### Brief Description of the Drawings

Fig. 1 is a schematic drawing of typical vacuum glazing;
Fig. 2A and 2B show the two methods for manufacturing vacuum glazing in the art;
Fig. 3A and 3B show two basic principles of the method according to the present invention;
Fig. 4 shows the procedure of the method for manufacturing vacuum glazing in a multi-sheets way and the schematic drawing of the device for manufacturing vacuum glazing according to a preferred embodiment of the present invention, the said device has several successive chambers;
Fig. 5 shows the procedure of the method for manufacturing vacuum glazing in a single-sheet way and the schematic drawing of the device for manufacturing vacuum glazing according to another preferred embodiment of the present invention, the said device has several successive chambers;
Fig. 6A and 6B show the two modes of the method and the device for manufacturing vacuum glazing in a multi-sheets way, respectively, one of which applies a separate chamber;
Fig. 7A and 7B show the other two modes of the method and device for manufacturing vacuum glazing in a multi-sheets way, which apply a separate chamber.

### Preferred Embodiments of The Present Invention

Next, the present invention will be described combining the accompanying drawings, which drawings and their descriptions are only used to illustrate the present invention and are not intended to be any limitation to the present invention. The protected scope of the present invention is defined by the appended claims.

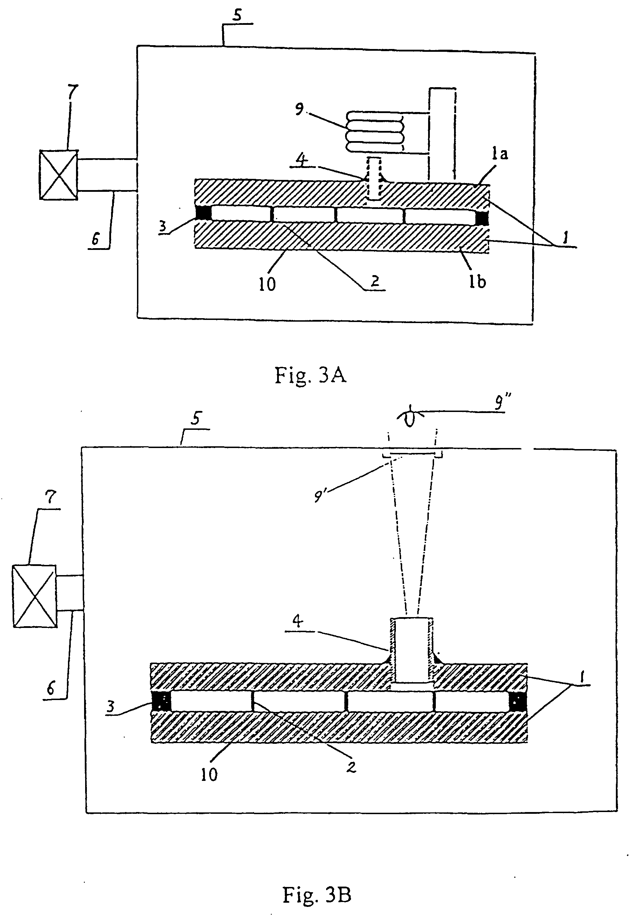

The basic principles of the said method for manufacturing vacuum glazing according to the present invention are shown in Fig. 3A and 3B. The starting sheet 10 of vacuum glazing includes two oppositely placed pieces of glass 1a, 1b, between which is a space and is put into a plurality of supports 2 to keep the space, wherein at least one of the pieces of glass has a pump out tube which communicates with the space formed between the two pieces of glass and is used for evacuation. It is desirable that the pump out tube locates in the vicinity of the edges or corners of the glass sheet. The said pump out tube can be more than one. The pieces of glass for manufacturing vacuum glazing can be common pieces of glass, such as float glass, wire glass, coat glass, colored glass, etc. The supports can be the common supports such as the supports made of metal, ceramic, alloy and the like.

As shown in Fig. 3A, the placed starting sheet 10 of vacuum glazing is put into an airtight chamber, e.g. vacuum chamber 5, which has the volume large enough to contain the whole starting sheet of vacuum glazing and communicates with the vacuum system 7 by a large diameter pipeline 6 to make the chamber reach the required vacuity when needed. For this purpose, first, it is needed that the edges of the starting sheet are sealed and a completely sealed edge is formed. The sealing glass 3 such as seal glass bars, glass powders, can be used to seal the edges of the starting sheet of vacuum glazing. Molten sealing glass is used and the sealing glass 3 is heated to be melt, to seal the edges of starting sheet of vacuum glazing. According to an embodiment of the present invention, the edges of the starting sheet of vacuum glazing is sealed by heating the starting sheet 10 of vacuum glazing to melt the sealing glass 3 which previously put on the edges of the starting sheet of vacuum glazing, then cooling to solidify the sealing glass. The heating temperature is the melting temperature or above. Since different sealing glasses have different melting temperatures, the heating temperature is usually in the range of about 350°C to about 550°C. The starting sheet of vacuum glazing can be heated by electric heater or hot gas heater.

The sealing glass used can be the conventional sealing glass available commercially. The preferred sealing glass of the present invention is the sealing glass powder. There are many kinds of glass powder, the one of which thermal expansion coefficient matches with that of the starting sheet of vacuum glazing is preferable.

The starting sheet of vacuum glazing should be evacuated to the required vacuity after being sealed on the edges. According to the present invention, the change of the vacuity of the inner space in the starting sheet of vacuum glazing is achieved by changing the vacuity of the vacuum chamber which contains the starting sheet of vacuum glazing. When the entire starting sheet 10 of vacuum glazing is put in the vacuum chamber 5, because of the presence of the evacuating hole on the glass sheet, the air in the inner space of the starting sheet 10 can communicates with the air in the vacuum chamber. Therefore, the vacuity of the inner space in the starting sheet of vacuum glass 10 will be increased as the vacuity of the vacuum chamber increased.

The evacuation step of the present invention can be conducted when the starting sheet 10 of vacuum glazing is at the room temperature or an elevated temperature. In the present invention, the evacuation is preferably conducted when the temperature of starting sheet of vacuum glazing is at an elevated temperature from above 150°C to below the melting temperature of the sealing glass used, more preferably when the temperature is at an elevated temperature from about 300°C to the melting temperature of the sealing glass used. To evacuate at an elevated temperature is helpful to remove adequately the moisture absorbed on the inner surface of the two pieces of glass from the inner space of the starting sheet. In the specification, the temperature, at which the moisture and the like absorbed on the starting sheet of vacuum glazing can be desorbed, is called evacuation temperature.

The hole-sealing step starts when the vacuity of the inner space within the starting sheet of vacuum glazing 10 reaches the required vacuity, usually 10⁻¹ to 10⁻⁴ Pa, that is, to seal the hole on the starting sheet of vacuum glazing, thereby obtaining the vacuum glazing with the required vacuity within its inner space. The hole-sealing can be conducted by applying the usual hole-sealing processes. According to an embodiment of the present invention, the hole-sealing step is achieved by heating and melting the glass tube 4 connected with the evacuating hole. One end of the glass tube 4 is connected with the evacuating hole, and the other is communicated with the environment, e. g. extending out of the outside surface of the glass sheet. It is better for the part of the glass tube to extend out of the outside surface of the glass sheet as short as possible. The heating can be conducted by using, for example, electric heater, or infrared or laser radiation device. As shown in Fig. 3A, the evacuating hole of the glass sheet is sealed by utilizing the heating coil 9 put on the evacuating hole previously so that the eligible vacuum glazing can be obtained. Fig 3B is substantially the same as Fig. 3A except that a window 9' which can be penetrated by infrared or laser ray, such as quartz glass window 9', and the purpose of hole-sealing can be achieved by utilizing the outside infrared spotlight or laser 9" to heat the evacuating tube 4 on the evacuating hole when the condition of hole-sealing is reached. The purpose of hole-sealing can also be achieved by using the infrared spotlight or laser (not shown) within the vacuum chamber 5 to heat the evacuating tube.

The glass tube can be ordinary glass tubes or glass tubes which absorb infrared light, wherein the glass tubes absorbing infrared light is prefered.

Several means can be adopted to make one end of the glass tube 4 described above connect with the evacuating hole. In the preferred mode of the present invention, the glass tube is put on the evacuating hole and the sealing glass, for example a sealing glass lantern ring pressed previously, is arranged at its joint part with the evacuating hole, then making the glass tube connect with the evacuating hole by heating and melting the sealing glass. This heating and melting step is preferably conducted together with the step of sealing the edges of the starting sheet 10 of vacuum glazing simultaneously.

If the evacuation is conducted when the starting sheet of vacuum glazing is in the elevated temperature state, the vacuum glazing after being evacuated and sealed need to be cooled. The cooling can be natural cooling or an uniform cooling achieved by providing water-cooling or direct air-cooling.

Since the present invention applies a method in which the starting sheet of vacuum glazing is entirely put in a vacuum chamber to conduct evacuation, a plurality of starting sheets of vacuum glazing can be put in the same vacuum chamber to conduct evacuation simultaneously. According to the method of the present invention, several sheets of the vacuum glazing can be produced at one time, that is, multiple starting sheets of vacuum glazing can be edge-sealed, evacuated and hole-sealed simultaneously.

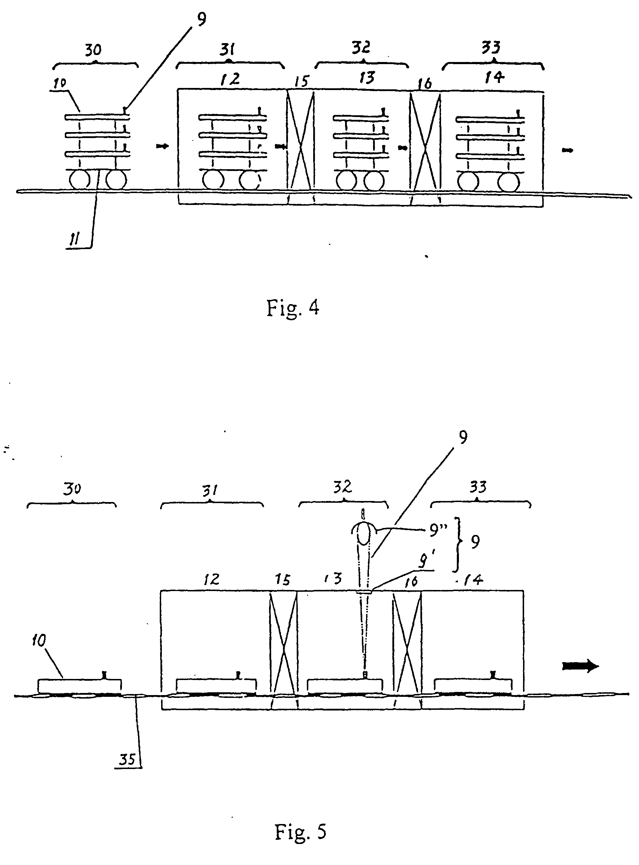

An embodiment of the present invention is shown in Fig. 4, wherein multiple starting sheets of vacuum glazing are placed with a space between them, and edge-sealed, evacuated and hole-sealed simultaneously, to produce multiple sheets of the vacuum glazing.

According to the method of the present invention, the production of vacuum glazing can be conducted in a chamber or several chambers, as shown in Fig. 4, 5 and 6, respectively.

The advantages of the method according to the present invention over the traditional methods of manufacturing vacuum glazing are as follows: 1) it eliminates the evacuating pipes connected to each vacuum glazing, including thin glass tubes and metal bellows, and makes the evacuating system match directly with vacuum chamber, thus, not only is the evacuating speed and the efficiency increased, but also the operation procedures are simplified, which benefits the mass production greatly; 2) it eliminates the sealing rings which are absolutely necessary in vacuum cupping method, thus the heating temperature is not restricted and the roasting temperature can reach over 300°C so that the vacuity is higher and more stable; 3) as it is not necessary to leave adsorption space for sealing rings, the evacuating holes can be made on the edges or corners of the glass sheets with the results that the vacuum glazing formed are more artistic; (4) instead of taking out the vacuum glazing after the temperature in the vacuum chamber had dropped down and then after heating again, pumping and sealing the evacuating tubes, as is operated in the traditional methods, in the preferable method according to the present invention, after sealing the edges of the glass sheets, evacuates and seals the evacuating tubes by making use of the remaining heat of the edge-sealing, so as to save both energy and the operation time.

On the basis of the new principle shown in Fig. 3, the said manufacturing method according to the present invention can be implemented to produce eligible vacuum glazing products by adopting a plurality of embodiments.

Fig. 4 and 5 illustrate a device system for manufacturing vacuum glazing, comprising: the starting sheets conveying part 30, e.g. a bracket 11, continuous moving or step-by-step moving roll or belt conveyor 35, used to convey the starting sheets; the heating and sealing part 31: with a heating means (member), e. g. the usual electric heater or air heater device, used to heat the placed starting sheets to the melting temperature of the edge-sealing glass powders; evacuating part 32: with an evacuating means, e. g. the usual vacuum pump and pipes, used to evacuate the edge-sealed glass sheets together with the said vacuum chamber to the required vacuity; hole-sealing member 9, e. g. hole-sealing coil or infrared or laser device that are often used in the field of vacuum glazing, used to seal the evacuating holes on the starting sheets of vacuum glazing; cooling part, e. g. the usual air-cooling, water-cooling device, used to cool the hole-sealed glass sheets, thus obtaining the vacuum glazing with the required vacuity.

In the device shown in Fig. 4 for manufacturing vacuum glazing, the said hole-sealing member 9 is a hole-sealing coil fixed previously on the evacuating glass hole 4, an electric current such as AC, DC or high frequency can be provided to it, to heat the evacuating glass hole 4 and to make it sealed. The said hole-sealing member 9 can also be a window 9', through which infrared or laser radiation can pass, as well as an infrared or laser heater 9" located outside of the said vacuum chamber 13, by which the evacuating glass hole 4 is heated and sealed; or an infrared of laser heating device located within the said vacuum chamber, by which the evacuating glass hole 4 is heated and sealed.

In the device shown in Fig. 4 for manufacturing vacuum glazing, the said conveying part 30 is the bracket 11, which is used to place laminatedly at least two starting sheets of vacuum glazing in different layer and to convey the same, thereby forming multiple sheets of vacuum glazing. Furthermore, the said conveying part 30 can also be the continuous moving or step-by-step moving roll or belt conveyor 35. The device shown in Fig. 5 is used to convey one starting sheet of vacuum glazing each time, thus forming one sheet of vacuum glazing each time.

In the device shown in Fig. 4 and 5 for manufacturing vacuum glazing, a first buffer chamber 15 and a second buffer chamber 16, which are used to adjust the vacuity and temperature, are arranged between the said heating and sealing part 31 and the evacuating part 32 and/or between the said evacuating part 32 and the cooling part 33, to make the glass sheets to be pre-evacuated and/or adjust their temperature from the edge-sealing temperature to the evacuating temperature, as well as to make the hole-sealed glass sheets enter into a low vacuum chamber and/or to adjust their temperature so as to enter the cooling chamber, respectively.

In the said device for manufacturing vacuum glazing, a preheating part is also arranged before the heating and edge-sealing part 31, to preheat the placed starting sheet of vacuum glazing.

The said device for manufacturing vacuum glazing also comprises temperature measuring means and/or vacuity measuring means.

In the said device for manufacturing vacuum glazing, the said parts 31, 32 and 33 designate several chambers in series, for example, as shown in Fig. 4 and 5.

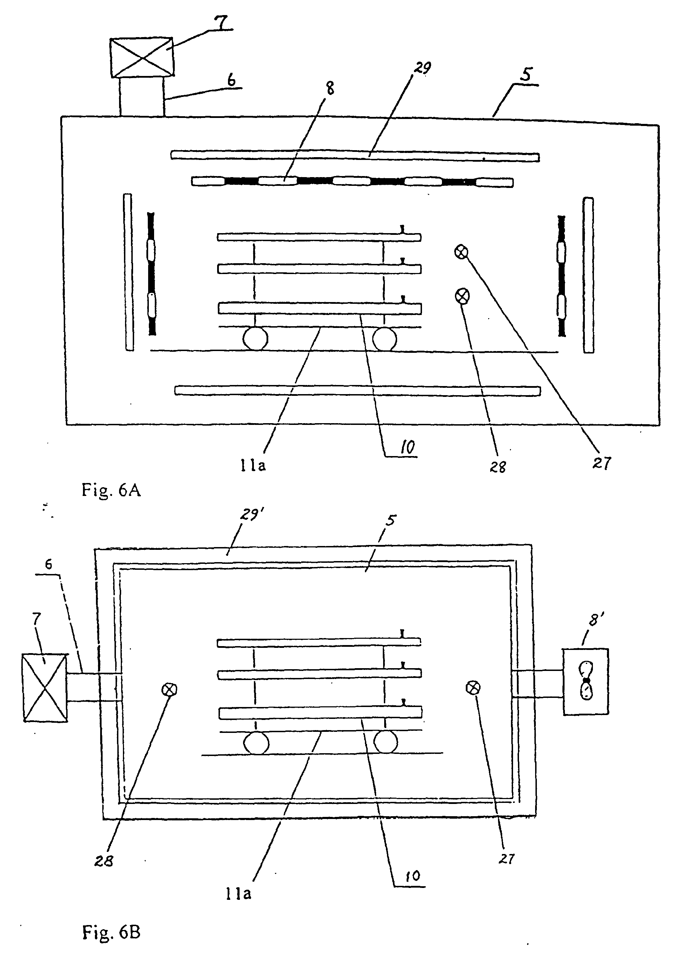

In another embodiment, the said parts 31, 32 and 33 are all located within one chamber, for example, as shown in Fig. 6A and B.

Next, a process embodiment of manufacturing vacuum glazing in a multiple sheets way will be described referring to Fig. 4. Place several arranged starting sheets of vacuum glazing 10 on the conveying bracket 11, wherein one starting sheet comprises two glass sheets and the supports 2 located between them, in which the sealing glass powders have been placed at the edges of the starting sheets of vacuum glazing, the sealing glass powders and the glass tubes 4 for sealing and its clamp have been placed on the evacuating holes. The coils 9 for sealing the holes are fixed previously at the location of the evacuating tubes 4 on the glass sheets, and connected to the power. The bracket first enters the heating chamber (the first chamber) 12, and is heated to the melting temperature of the edge-sealing glass powder, that is, about 300 - 550°C, then is cooled to solidify the edge-sealing glass powder, and the edge-sealing is completed. The bracket 11 then passes through the optional first buffer chamber (the second chamber) 15 and enters the vacuum chamber (the third chamber) 13. When the temperature of the starting sheets of vacuum glazing reaches a temperature between about 300°C and a temperature below the melting temperature of the edge-sealing glass powders, the evacuation begins. When the vacuity within the vacuum chamber 13 reaches 10⁻¹ to 10⁻⁴ Pa, preferably 10⁻² to 10⁻⁴ Pa, the hole-sealing begins by switching on the electric power (AC, DC or high frequency) of the hole-sealing member to seal the holes. Then, the bracket 11 pass through an optional second buffer chamber (the fourth chamber) 16 and enter the cooling furnace (the fifth chamber) 14 to conduct the cooling, then removing out from the furnace. Herein, the said first and second buffer chambers 15, 16 functions as adjusting the vacuity and the temperature, to make the glass sheets pre-evacuated and/or to adjust the temperature from the edge-sealing temperature to the evacuating temperature, and to make the vacuum glazing sheets after the holes are sealed enters a low vacuum chamber and/or to adjust the temperature from the evacuating temperature to the temperature for entering the cooling chamber. These two buffer chambers can be omitted sometimes.

Fig.5 is the process embodiment of manufacturing vacuum glazing in a single-sheet way. The difference between it and the above embodiment is that it only forms one vacuum glazing sheet each time. Similar to Fig. 4, the starting sheet 10 of vacuum glazing which has been arranged first enters the heating chamber to seal the edges, then enters the a flat vacuum chamber 13 to evacuate, at this time the hole-sealing can be conducted by means of the infrared spotlight or laser radiation 9" located outside or inside of the vacuum chamber, or by means of the hole-sealing coils 9 fixed in the vacuum chamber, then enters the cooling chamber 14 to be cooled and discharged. Since it is unnecessary for the hole-sealing coil to be fixed on the vacuum glazing, the embodiment apparently brings about many convenient benefits. The said first and the second buffer chamber described above can also be used in the embodiment.

In the device for manufacturing vacuum glazing as shown in Fig. 4 and 5, a preheating chamber is preferably arranged before the heating chamber 12, so as to preheat the conveying starting sheets 10 of vacuum glazing before they enter the heating chamber 12.

Fig. 6A and 6B illustrate schematically a device for manufacturing vacuum glazing by means of a single chamber according to a preferable example of the present invention. The apparent difference between this embodiment and the two other embodiments described above is that the main steps, such as the said heating, evacuating, cooling, etc., are all completed in a single chamber and it is not necessary to adopt several continuous chambers. In Fig. 6A, several starting sheets of vacuum glazing, which have been properly arranged, placed laminatedly on the conveying device such as bracket 11, then put the bracket into the vacuum chamber 5, wherein the vacuum chamber 5 is provided with a heater 8, an insulating layer 29, a temperature measuring device 27 and a vacuity measuring device 28. The vacuum chamber 5 is heated to the melting temperature of the edge-sealing glass powder, that is, a temperature from about 300 to about 550°C, then is cooled to make the edge-sealing glass powder solidify, and so the edge-sealing is completed. After the edge-sealing glass powder solidify, the evacuation begins by means of the evacuating pipe 6 and the evacuating device 7. When the vacuity reached to 10⁻¹ to 10⁻⁴ Pa, preferably 10⁻² to 10⁻⁴ Pa, the hole-sealing mechanism starts to seal the holes. After the hole-sealing is completed, the vacuum chamber 5 is cooled, and then the vacuum glazing is removed from the chamber. Unlike Fig. 6A, in Fig. 6B, the heater 8 is a fan 8' which can be adjusted to heat or cool. That is to say, in Fig. 6B, heating is carried out in the hot air heating manner, while cooling can be carried out by means of the cool air outside of the chamber, and the other structures can be remained unchanged. This is helpful to increase the temperature uniformity and the heating efficiency. The heater 8 in Fig. 6A can also be replaced by a fan which can be adjusted to heat or cool. The hole-sealing mechanism can be an infrared lamp, a laser or a heating coil.

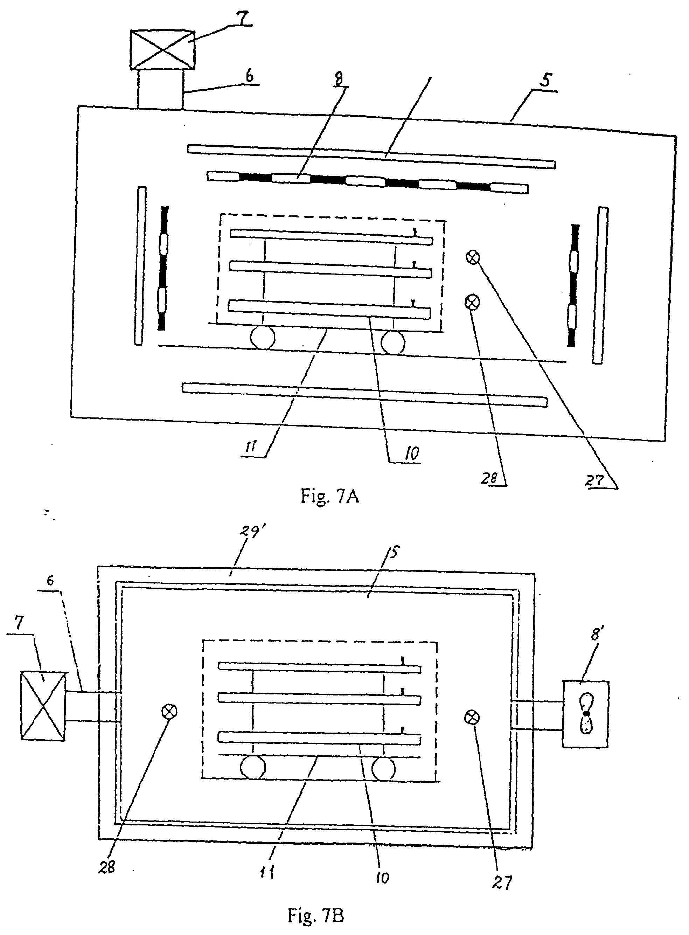

Referring to both Fig. 7A and 7B, a shield 11', with a window which can be opened or closed, can be arranged on the conveyor 11, to function as thermal insulation. After the holes are sealed, the vacuum glazing products can be removed from the chamber at high temperature under the protection of the closed shield, and another semi finished article conveyor can enter the chamber which is at high temperature, therefore, the operation efficiency is improved and the energy consumption is reduced.

In order to save energy resource, a preheating step can be arranged before the heating step so that the glass sheets can be preheated, for example, by making use of the afterheat of the cooling process.

A preferable structure and operation for manufacturing vacuum glazing according to the present invention is described as following. The device for manufacturing vacuum glazing is used to produce vacuum glazing from a starting sheet of vacuum glazing 10 which comprises two pieces of glass 1a, 1b placed oppositely, between which there is a space. A plurality of supports 2 are placed in the space to keep it, wherein at least one of the pieces of glass has a hole, which communicates with a space formed between the two pieces of glass and is used to evacuate. The device includes:
a first chamber 12, which can reach a first temperature, for example about 500°C, wherein the first temperature is suitable for the edge-sealing operation of the starting sheets of vacuum glazing;
a second chamber 15, which can reach a second temperature and a first vacuity, wherein the second temperature is lower than the first temperature, for example 380°C, and it is suitable for the desorption of the components adsorbed by pieces of glass, and the first vacuity is suitable for the primary evacuation of the starting sheets of vacuum glazing, for example 10⁻¹ Pa; the second chamber 15 plays a buffer effect on the temperature and vacuity for the third chamber described following;
a third chamber 13, which can reach a third temperature and a second vacuity, wherein the said second vacuity is higher than the said first vacuity, and both the third temperature and the second vacuity are suitable for the desorption and removal of the substances absorbed on the starting sheets of vacuum glazing, and to make the space between the two pieces of glass keep on a predetermined vacuity after the holes are sealed; the second vacuity is for example 10⁻¹ to 10⁻⁴ Pa, preferably 10⁻² to 10⁻⁴ Pa.
the said third chamber 13 also comprises a hole-sealing member 9, which is suitable to heat and seal the holes on the starting sheets of vacuum glazing; wherein the hole-sealing member can be an infrared lamp or a laser or a heating coil;
the said first chamber 12, the said second chamber 15 and the said third chamber 13 can be connected together by vacuum valves, so as to make the second chamber and the third chamber keep their vacuity.

In a preferable manner, it further comprises a fourth chamber 16 connected with the third chamber 13 by a vacuum valve, the fourth chamber 16 can reach a third vacuity and a fourth temperature, wherein the third vacuity is lower than the second vacuity and the fourth temperature is lower than the third temperature. The third vacuity is for example 10⁻¹ Pa.

In a more preferable manner, it further comprises a fifth chamber 14 connected with the fourth chamber 16 through a vacuum valve, and the fifth chamber 14 has a fifth temperature and a ordinary pressure, wherein the fifth temperature is lower than the fourth temperature, and the temperature of the fifth chamber can be cooled in a scheduled gradient.

In a preferable manner, it further comprises a preheating chamber before the first chamber 12, used to preheat the starting sheets of vacuum glazing.

In the preferable manner of the present invention, the edge-sealing step, the evacuating step and the hole-sealing step describe above are conducted in a temperature range of 200 to 550°C, preferably 300 to 510°C. One of the advantages of the manner is that it is unnecessary to reduce the temperature to a very low temperature after the edge-sealing step. This has the effects of both saving energy and time, on the other hand, the starting sheets of vacuum glazing subjects to less thermal shock, thereby improving the yield of finished vacuum glazing.

During manufacturing vacuum glazing in the preferred device described above, a preferable operation procedure will be described as following. First, at least one starting sheet of vacuum glazing is preheated in the preheating chamber so as to avoid the excessive thermal shock when it enters the first chamber 12. The sealing glass has been arranged on the edges of the starting sheet of vacuum glazing, the sealing glass and the glass tube for sealing have been arranged on its evacuating hole. Next, the structure described above enters the first chamber 12, being heated to the melting temperature of the sealing glass to make the edges of the starting sheet to be sealed while the glass tube for sealing being air-tightly connected to the evacuating hole. Then the resulting structure is conveyed to the second chamber 15, in which it subjects to a proper temperature falling and a primary evacuation. The resulting structure is then conveyed to the third chamber 13, in which it subjects to a further evacuation to a higher vacuity of about 10⁻¹ to 10⁻⁴ Pa, preferably up to 10⁻² to 10⁻⁴ Pa. At this time, the glass tube for sealing is heated to melt and to seal the evacuation hole. Next, the obtained structure is conveyed to the fourth chamber 16. The fourth chamber 16 has a vacuity of about 10⁻¹ Pa, and is connected with the third chamber through a vacuum valve, so that the high vacuity of the third chamber may not be interrupted excessively, especially that the operation time can be reduced. It is the best way to convey the obtained structure into the fifth chamber 14 to reduce the temperature gradually. The chamber 14 is under a normal pressure so as to reduce the temperature controllably.

In the following, a device for manufacturing vacuum glazing according to another preferable embodiment will be described combining with Fig. 7A and 7B. The said device comprises:
an airtight chamber 5;
a heating part 8, which can be controlled to make the temperature of the chamber rise or fall;
a vacuum system, which is used to evacuate the chamber 5;
a conveyor device 11, which is suitable for containing several starting sheets of vacuum glazing, each starting sheet 10 comprising two pieces of glass placed oppositely, wherein there is a space between the two pieces of glass, and a plurality of supports are arranged in the space to keep it, at least one of the pieces of glass has a hole which communicates with the space formed between the two pieces of glass and is used for evacuation;
a hole-sealing member 9, which is suitable to heat and seal the hole of each starting sheet 10 of vacuum glazing when the space formed between the two pieces of glass reach the predetermined vacuity;
a control device, which can control the operation of the said heating part and the said vacuum system;
wherein the said conveyor device 11 comprises a shield 11a that can encloses the set starting sheets of vacuum glazing, and the said conveyor device 11 can be pushed into and removed out from the chamber 5, the shield 11a can be controllably in a first open state and a second closed state, wherein the starting sheet 10 communicates with the chamber when the shield is in the first open state so as to heat and evacuate the starting sheet 10, and the starting sheet 10 is shielded to hold its temperature when the shield is in the second closed state.

It is the best way to make the shield has a ventilative widow which can be opened or closed, for example with a shutter or sliding plate type structure. When the shield is in the first open state, it is easy to conduct heating and evacuating, and light beam can penetrate through the open part, so the hole-sealing operation can be achieved by means of an infrared or a laser device.

Referring to Fig. 7A and 7B, a method for manufacturing vacuum glazing according to a preferable embodiment of the present invention comprises the following steps:
placing at least one starting sheet of vacuum glazing on a conveyor 5, wherein each starting sheet 10 comprises two pieces of glass placed oppositely, and there is a space between the two pieces of glass, and a plurality of supports are arranged in the space to keep it, wherein at least one of the pieces of glass has a hole which communicates with the space formed between the two pieces of glass and is used for evacuation; the said conveyor includes a shield by which the starting sheets of vacuum glazing is enclosed; the sealing glass is arranged at the edges of each starting sheet of vacuum glazing; at this time, it is best to arrange a glass tube 4 for sealing on the hole and the sealing glass around the glass tube; a heating coil is also arranged in the step of a preferable embodiment in which the hole-sealing operation is conducted by means of the heating coil;
putting the conveying device 11 into a chamber 5, and making shield 11a in the first open state;
heating the chamber 5 to reach the melting temperature of the said sealing glass, then reducing the temperature gradually, so as to seal the edges of the starting sheet of vacuum glazing with the said sealing glass; if the said glass tube for sealing and the sealing glass around the glass tube have been also arranged, the glass tube is connected to the hole part in this step;
evacuating the chamber 5 while keeping the chamber at the evacuating temperature of the pieces of glass;
sealing the hole when the vacuity of the space between the two pieces of glass reaches a predetermined value; the hole-sealing can adopt various methods described above.
making the shield 11a be in the second close state, and removing out the entire conveyor 11 from the chamber.

After the conveyor 11 is removed, another conveyor charged with the starting sheets of vacuum glazing can be put into the chamber.

According to this manner, the conveyor with a shield 11a and in which the charged vacuum glazing has been sealed can be removed directly without reducing the temperature of the whole chamber 5 after the edge-sealing operation, evacuating operation and the hole-sealing of the start sheets of vacuum glazing on a conveyor has been completed, thus another charged conveyor can directly enter into the chamber 5 without reducing its temperature, thereby having an efficient and energy saving effects. Moreover, the temperature reduction of the vacuum glazing enclosed in the shield 11a and outside of the chamber 5 is easy to control. Especially for the shield having the first and the second state, this is beneficial to control the falling rate of the temperature within the shield after it is removed from the elevated temperature chamber.

The present invention has been described above combining with some preferable embodiments, various changes and modifications can be made by those skilled in the art without departing from the scope of the appending claims. The present invention is intended to include all of the equivalent changes within the scope of the appending claims.

## Claims

1. A method for manufacturing vacuum glazing, comprising the following steps:
(i) a step of placing the starting sheets of vacuum glazing: placing two pieces of glass oppositely with a space between them, arranging a plurality of supports between the two pieces of glass to keep the said space, wherein at least one piece of the glass has an evacuating hole which communicates with the inner space formed between the said two pieces of glass;
(ii) an edge-sealing step: sealing the edges of the starting sheets of vacuum glazing, so as to make the starting sheets of vacuum glazing form a completely sealed edges;
(iii) the evacuating step: in a vacuum chamber, evacuating the edge-sealed glass sheets together with the vacuum chamber, to make the inner space within the glass sheets produce the required vacuity;
(iv) the hole-sealing step: sealing the evacuating hole of the edge-sealed glass sheets, thus obtaining the vacuum glazing with the required vacuity.

2. The method for manufacturing vacuum glazing according to Claim 1, wherein the said edge-sealing step is conducted by using sealing glass and heating the starting sheets of vacuum glazing to make the sealing glass melt.

3. The method for manufacturing vacuum glazing according to Claim 1 or 2, wherein the said evacuating step is conducted when the said starting sheet of vacuum glazing is at its evacuating temperature.

4. The method for manufacturing vacuum glazing according to Claim 3, wherein the said evacuating temperature is from about 300°C to a temperature below the melting point of the said sealing glass.

5. The method for manufacturing vacuum glazing according to Claim 2, wherein the said sealing glass is glass powder.

6. The method for manufacturing vacuum glazing according to Claim 2, wherein the said evacuating hole has a glass tube for sealing, one end of the said glass tube connecting to the said evacuating hole, and the other end connecting to the environment.

7. The method for manufacturing vacuum glazing according to Claim 6, wherein the said glass tube is connected with the said evacuating hole through the said sealing glass.

8. The method for manufacturing vacuum glazing according to Claim 3, further comprises a cooling step, in which an uniform cool is conducted to the vacuum glazing obtained from the hole-sealing step.

9. The method for manufacturing vacuum glazing according to Claim 2, further comprises a step of preheating the said starting sheet of vacuum glazing before its edge-sealing step.

10. The method for manufacturing vacuum glazing according to Claim 7, wherein the step of connecting the said glass tube with the said evacuating hole is conducted simultaneously with the edge-sealing step.

11. The method for manufacturing vacuum glazing according to Claim 10, wherein the said edge-sealing step, both the said evacuating step and the said hole-sealing step are conducted in one chamber which can be evacuated and heated.

12. The method for manufacturing vacuum glazing according to Claim 1, wherein the said edge-sealing step, the said evacuating step and the said hole-sealing step are conducted in a temperature ranging from 200°C to 550°C.

13. The method for manufacturing vacuum glazing according to Claim 12, wherein the said edge-sealing step, the said evacuating step and the said hole-sealing step are conducted in a temperature ranging from 300°C to 510°C.

14. A method for manufacturing vacuum glazing, comprising the following steps:
(i) a step of placing starting sheet of vacuum glazing: putting two pieces of glass oppositely with a space and a plurality of supports are arranged between the two pieces of glass to keep the said space, glass powder used for edge-sealing is put at the edges of the said space, wherein at least one piece of glass has a evacuating hole, and a glass tube and some glass powders for hole-sealing are put around the said evacuating hole;
(ii) a step of heating and edge-sealing, heating the arranged starting sheet of vacuum glazing to the melting temperature of the said sealing glass powder for edge-sealing, to make the starting sheet form a completely sealed edges;
(iii) an evacuating step: in a closed vacuum chamber, evacuating the edge-sealed starting sheet together with the said vacuum chamber to make the space within the said starting sheets produce the required vacuity;
(iv) a hole-sealing step: sealing the evacuating hole of the evacuated starting sheet by heating the said glass tube to melt;
(v) a cooling step: cooling the sealed starting sheet, thereby obtaining the vacuum glazing with the required vacuity.

15. The method for manufacturing vacuum glazing according to Claim 14, wherein the said hole-sealing step is conducted by supplying electricity to the hole-sealing coil fixed previously on the said evacuating hole to produce heat, then making the evacuating hole to be sealed.

16. The method for manufacturing vacuum glazing according to Claim 14, wherein the said hole-sealing step is conducted through a window on the vacuum chamber, which window permits infrared or laser radiation penetrating into the said vacuum chamber, by means of a infrared or laser heater located outside of the said vacuum chamber to heat the said evacuating hole, then sealing the evacuating hole.

17. The method for manufacturing vacuum glazing according to Claim 14 or 15, wherein the said placing step is a step that place at least two pieces of starting sheets of vacuum glazing in pairs and in different layers, thus can produce several pieces of vacuum glazing at once.

18. The method for manufacturing vacuum glazing according to Claim 14, wherein a first buffer step and a second buffer step are also arranged between the said heating and edge-sealing step (2) and the said evacuating step (3) and/or between the said hole-sealing step(4) and the said cooling step (5), so as to adjust the vacuity and temperature, pre-evacuating the glass sheets and/or adjusting its temperature to make it from the edge-sealing temperature vary to the evacuating temperature as well as making the hole-sealed glass sheets enter into the low vacuum chamber and/or adjusting temperature to make it enter into the cooling chamber, respectively.

19. The method for manufacturing vacuum glazing according to Claim 14, wherein the preheating step is arranged before the said edge-sealing (2) to preheat the placed glass sheets.

20. The method for manufacturing vacuum glazing according to one of Claims 14, 15, 16, 17, wherein, the said steps (2) to (5) are all completed in one chamber.

21. The method for manufacturing vacuum glazing according to one of Claims 15 to 19, wherein the said steps (2) to (5) are separately completed in several chambers in series.

22. A device for manufacturing vacuum glazing, it comprising:
an airtight chamber, which is suitable for containing several starting sheets of vacuum glazing, wherein each starting sheet comprises two pieces of glass placed oppositely, there is a space between the two pieces of glass and a plurality of supports are placed in the space to keep it, wherein at least one of the pieces of glass has a hole which communicates with the space formed between the two pieces of glass and is used for evacuation;
a heating part, which is used to make the temperature of the chamber rise or fall;
a vacuum system, which is used to evacuate the chamber;
a hole-sealing member, which is suitable to conduct the heating and sealing of the hole of each starting sheets of vacuum glazing when the vacuity of the space formed between the two pieces of glass reaches the target vacuity;
a control device, which can control the operation of the said heating part and the said vacuum system, to make the said chamber being at least in the following stages:
a. the edge-sealing stage of the starting sheets of vacuum glazing, at which the chamber reaches the melting temperature of a sealing glass and under an ordinary pressure;
b. evacuating stage, at which the chamber has a temperature that can make starting sheets of vacuum glazing sufficiently evacuated, and makes the space formed between the two pieces of glass reach the target vacuity.

23. The device according to Claim 22, wherein the said hole-sealing member is a laser, the said device further comprises a cooling member, which can make the temperature of the device decrease according to a scheduled gradient.

24. A device for manufacturing vacuum glazing, which is used to produce vacuum glazing from a glass sheet of vacuum glazing, the glass sheet comprises two pieces of glass placed oppositely, wherein there is a space between the two pieces of glass and a plurality of supports are put in the space to keep it, wherein at least one of the pieces of glass has a hole which communicates with the space formed between the two pieces of glass and is used for evacuation;
the said device comprises:
a first chamber, the said first chamber can reach a first temperature at which the edge-sealing operation of the glass sheets can suitably conducted;
a second chamber, the said second chamber can reach a second temperature and a first vacuity, wherein the said second temperature is lower than the said first temperature, and the desorption of glass sheets can suitably conducted at the said second temperature, the said first vacuity is suitable to evacuate the glass sheets primarily;
a third chamber, the said third chamber can reach a third temperature and a second vacuity, wherein the said second vacuity is higher than the first vacuity; the said third temperature and the second vacuity are suitable to make the substance absorbed on the glass sheets being desorbed and evacuated, and to make the space between the two pieces of glass keeping a target vacuity after the said hole is sealed;
the said chamber further comprising a hole-sealing member, which is suitable to conduct the heating and sealing of the hole of the glass sheets;
the said first chamber, the second chamber and the third chamber being connected each other through vacuum valves, thereby making the second and the third chamber keep at their vacuity.

25. The device according to Claim 24, further comprising a fourth chamber connected with the third chamber through a vacuum valve, wherein the fourth chamber can reach a third vacuity and a fourth temperature, the third vacuity is lower than the second vacuity and the fourth temperature is lower than the third temperature.

26. The device according to Claim 25, further comprising a fifth chamber connected with the fourth chamber through a vacuum valve, the fifth having a fifth temperature and an ordinary pressure, wherein the fifth temperature is lower than the fourth temperature and the temperature of the fifth chamber can be reduced according to a scheduled gradient.

27. The device according to Claim 26, wherein the said first vacuity and the said third vacuity is in an order of 10⁻¹ Pa, the said second vacuity is in an order of 10⁻¹ to 10⁻⁴ Pa.

28. The device according to Claim 24, wherein the said hole-sealing member is a coil located on the evacuating hole, which is heated and sealed by supplying electricity to the coil.

29. The device according to Claim 24, wherein the said hole-sealing member is a infrared or laser heater.

30. The device according to Claim 24, wherein a preheating part is arranged before the said first chamber, so as to preheat the glass sheets.

31. The device according to one of Claims 24 to 30, further comprising a controllable conveyor used to convey the glass sheets.

32. A device which is used to implement the method for manufacturing vacuum glazing according to one of the previous claims 1 to 21, comprising:
(i) a glass sheets conveyor part, being used to convey starting sheets of vacuum glazing;
(ii) a heating and edge-sealing part; having a heating means, being used to heat the placed glass sheets to the melting temperature of the sealing glass powder for edge-sealing;
(iii) an evacuating part: having a evacuating means and a closed vacuum, being used to evacuate the edge-sealed glass sheets together with the said vacuum chamber to reach a required vacuity;
(iv) a hole-sealing part: being used to seal the evacuating hole of a glass sheet;
(v) a cooling part: being used to cool the hole-sealing glass sheet, thereby obtaining the vacuum glass with the required vacuity.

33. A device for manufacturing vacuum glazing, comprising:
an airtight chamber;
a heating system, which is controlled to make the temperature of the chamber rise or fall;
a vacuum system, being used to evacuate the said chamber;
a conveyor, which is suitable for containing several starting sheets of vacuum glazing, wherein each glass sheet comprises two pieces of glass placed oppositely, there is a space between the two pieces of glass, a plurality of supports are put in the space to keep it, wherein at least one of the pieces of glass has a hole which communicates with the space formed between the two pieces of glass and is used for evacuation;
a hole-sealing member, which is suitable to heat and seal the hole of each glass sheet when the vacuity of the space formed between the two pieces of glass reaches the target vacuity;
a control system, which can control the operation of the said heating part and the said vacuum system;
wherein the said conveyor comprises a shield which the charged glass sheets, and the conveyor can be put into and removed out from the said chamber, the said shield can controllably be in a first open state and a second closed state, in the first open state, the said glass sheets communicate with the said chamber so as to be heated and evacuated, in the second state, the said glass sheets are shielded to hold their temperature.

34. The device according to Claim 33, wherein the said shield has a ventilation window which can be opened and closed, the shield being in the first open state when the ventilation window is opened and the shield being in the second closed state when the ventilation window is closed.

35. A method for manufacturing vacuum glazing, comprising the following steps:
putting at least one glass sheet on a conveyor, wherein each glass sheet comprises two pieces of glass oppositely placed, there is a space between the two pieces of glass and a plurality of supports are put in the space to keep it, wherein at least one of the pieces of glass has a hole which communicates with the space formed between the two pieces of glass and is used for evacuation; the said conveyor including a shield by which the said glass sheets are enclosed; a kind of sealing glass being arranged on the edges of each glass sheet;
putting the said conveyor into a chamber and making the said shield in the first open state;
heating the chamber to reach the melting temperature of the said sealing glass, then lowering the temperature to seal the said edges of the glass sheets with the sealing glass;
evacuating the chamber and keeping the chamber at the evacuating temperature of glass sheets;
sealing the said hole when the vacuity of the space between the two pieces of glass reaches a target value;
making the said shield in the second closed state and removing the whole conveyor from the said chamber.

36. The method according to Claim 35, wherein after the said conveyor is removed, put another conveyor charged with glass sheets in the chamber.

37. The method according to Claim 35, wherein before the said conveyor is put into the said chamber, a glass tube for sealing and a kind of sealing glass are also arranged on the said hole, therefore, in the later step, the glass tube is welded on the hole at the same time as the edges of glass sheet are sealed.
